# EUROPÄISCHE PATENTSCHRIFT

(11) **EP 3 247 621 B1**
(45) Veröffentlichungstag und Bekanntmachung des Hinweises auf die Patenterteilung: **03.04.2019**
(21) Anmeldenummer: 16704380.1
(22) Anmeldetag: 18.01.2016
(51) Int. Cl.: B63B 1/32, B63B 1/24, B63H 9/04, B63B 43/06, B63B 13/00

(54) **SEGELBOOT**
SAILBOOT
VOILIER

(30) Priorität: 19.01.2015 AT 500292015
(43) Veröffentlichungstag der Anmeldung: 29.11.2017
(73) Patentinhaber: Steinkogler, Peter, 4802 Ebensee (AT)
(72) Erfinder: Steinkogler, Peter, 4802 Ebensee (AT)
(74) Vertreter: Patentanwaltskanzlei Hübscher
(86) Internationale Anmeldenummer: PCT/AT2016/050007
(87) Internationale Veröffentlichungsnummer: WO 2016/115583

(56) Entgegenhaltungen:
- EP-A1- 0 084 995
- WO-A1-02/081296
- FR-A1- 2 655 309
- US-A- 3 987 982

## Beschreibung

### Technisches Gebiet

Die Erfindung bezieht sich auf ein Segelboot mit einem Bootskörper, zwei zusätzlich zu den Segeln seitlich vom Bootskörper abstehenden Strömungsprofilen und wenigstens einem Unterwassertragflügel.

### Stand der Technik

Zum Manövrieren von Segelbooten ist es bekannt (EP 0358888 A1), zwei seitlich vom Bootskörper abstehende Strömungsprofile vorzusehen, die an deren Enden Schwimmkörper sowie nach unten ragende Flügelstiele aufweisen, die je einen Auftriebssteuerflügel tragen, wobei die Flügelstiele als Lateralsteuerflügel wirken. Nachteilig ist daran allerdings, dass bei höherem Wellengang oder stärkerer Krängung eines solchen Segelbootes die Schwimmkörper hydrodynamisch wirksam werden und somit die hydrodynamischen Eigenschaften des Segelbootes sowie das Steuerverhalten der Lateralsteuerflügel negativ beeinflussen. Dies führt dazu, dass bei höheren Fahrgeschwindigkeiten die Stabilität und Manövrierbarkeit eines solchen Segelbootes beeinträchtigt wird bzw. höhere Fahrgeschwindigkeiten erst gar nicht erreicht werden können.

Darüber hinaus sind Cat-getakelte Einhandjollen bekannt, die mit Tragflügeln ausgestattet sind. Diese heben den Bootskörper aufgrund seines geringen Gewichtes schon bei geringer Geschwindigkeit aus dem Wasser. Zum Ausgleich des Segeldruckes sitzt der Segler in diesem Fall auf seitlich vom Bootskörper abstehenden Auslegerrahmen. Nachteilig an diesen Einhandjollen ist allerdings deren reduzierte Stabilität und die aufgrund des begrenzten ausgleichbaren Segeldruckes geringe Fahrgeschwidigkeit.

### Darstellung der Erfindung

Der Erfindung liegt somit die Aufgabe zugrunde, ein Segelboot der eingangs geschilderten Art so auszugestalten, dass hohe Fahrgeschwindigkeiten unter Erhaltung der Stabilität des Segelbootes und eines ausgewogenen Steuerverhaltens erreicht werden können.

Die Erfindung löst die gestellte Aufgabe dadurch, dass die Strömungsprofile V-förmig vom Bootskörper nach oben ragen und je ein aerodynamisches Querruder bildendes aerodynamisches Leitwerk aufweisen und dass der wenigstens eine Unterwassertragflügel mit einem ein hydrodynamisches Querruder bildendes hydrodynamischen Leitwerk versehen ist.

Zur Stabilisierung eines Segelbootes beziehungsweise um den Segeldruck und folglich die Fahrgeschwindigkeit zu erhöhen, muss bei einem erfindungsgemäßen Segelboot mit einem Rumpf ein der leeseitigen Krängung entgegenwirkendes Drehmoment um die Längsachse des Bootskörpers erzeugt werden. Dies ist insbesondere dann erforderlich, wenn das aufrichtende Moment des Segelbootes in Ermangelung eines Kieles, aufgrund eines besonders schmalen Rumpfes vergleichsweise gering oder, wie hier im Falle eines sich bei höheren Geschwindigkeiten aus dem Wasser hebenden Bootskörpers, nicht vorhanden ist.

Zur Erzeugung eines solchen Gegenmomentes kann erfindungsgemäß ein aerodynamisch wirksames Leitwerk auf zwei V-förmig vom Bootskörper nach oben ragenden, symmetrisch zum Bootskörper angeordneten Strömungsprofilen vorgesehen sein. Durch die V-förmige Anordnung der Strömungsprofile und somit auch des Leitwerkes wirkt dieses sowohl als Querruder, Höhen- und Seitenleitwerk. Die in Bezug auf den Bootskörper V-förmige und symmetrische Anordnung der Strömungsprofile ermöglicht dabei, dass das aerodynamische Leitwerk auch bei stärkerer Krängung des Segelbootes, wie sie bei höherem Wind- und Segeldruck zu befürchten ist, wirksam bleibt.
Um ein erfindungsgemäßes Segelboot zu stabilisieren beziehungsweise um Fahrgeschwindigkeit und Segeldruck zu erhöhen, kann das Leitwerk ein aerodynamisches Querruder bilden, wobei sich vorteilhafte konstruktive Eigenschaften ergeben, wenn dieses aerodynamische Querruder in das seitlich vom Bootskörper abstehende Strömungsprofil eingelassen ist. In der Neutralstellung des aerodynamischen Querruders können die Strömungsprofile aerodynamisch neutral wirken, das heißt weder aerodynamischen Auf- noch Abtrieb erzeugen. Dies ist beispielsweise dann der Fall, wenn die Strömungsprofile im Gegensatz zu herkömmlichen Tragflächen symmetrisch ausgebildet sind, sodass sie für sich weder Aufnoch Abtrieb erzeugen. Im Falle einer Kränkung des erfindungsgemäßen Segelbootes kann über das aerodynamische Querruder auf dem einen Strömungsprofil ein Auftrieb und auf dem anderen Strömungsprofil ein Abtrieb erzeugt werden, um ein der Krängung entgegenwirkendes Drehmoment um die Längsachse des Bootskörpers zu erzeugen. Die Strömungsprofile können allerdings auch ähnlich zu bekannten Tragflächen so ausgebildet sein, dass Sie unabhängig von der Stellung des aerodynamischen Querruders einen aerodynamischen Auftrieb erzeugen.

Zur Erzeugung eines wie oben beschriebenen Gegenmomentes kann erfindungsgemäß anstatt oder ergänzend zum aerodynamischen Leitwerk ein Unterwassertragflügel mit einem als hydrodynamisches Querruder ausgebildeten hydrodynamischen Leitwerk vorgesehen sein. Ein solcher Unterwassertragflügel kann beispielsweise an einem oder mehreren vom Bootskörper nach unten ragenden Holmen angeordnet sein, wobei die beiden Ruderblätter des hydrodynamischen Querruders jeweils seitlich am Holm drehbar gelagert sind.
Sind mehrere Unterwassertragflügel vorgesehen, so kann auch nur ein Teil dieser Unterwassertragflügel mit einem als hydrodynamisches Querruder ausgebildeten hydrodynamischen Leitwerk versehen sein, während die übrigen Unterwassertragflügel lediglich ein Höhenruder mit einem oder mehreren gleichsinnig wirkenden Ruderblättern bilden und damit zur Regulierung der Auftriebskraft dienen. Beispielsweise können ein Holm mittschiffs und ein Holm im Heckbereich jeweils auf der Längsachse des Bootskörpers vorgesehen sein, wobei dem mittschiffs angeordnete Holm ein als Querruder ausgebildeter Unterwassertragflügel und dem im Heckbereich angeordneten Holm ein als Höhenruder ausgebildeten Unterwassertragflügel zugeordnet ist.
Um ein besonders ausgewogenes Steuerverhalten zu ermöglichen, ist das oben beschriebene aerodynamische und das hydrodynamische Querruder in oder im Wesentlichen in einer Ebene quer zur Längsachse des Bootskörpers angeordnet. Um im Fall mehrerer auf der Bootslängsachse hintereinander angeordneter Holme eine gegenseitige hydrodynamische Beeinflussung der auf den beiden Holmen angeordneten Unterwassertragflügel beispielsweise durch Verwirbelungen zu vermeiden, können die Unterwassertragflügel in unterschiedlichen Höhen angeordnet oder die Holme unterschiedlich lang ausgebildet sein.
Der erfindungsgemäße Einsatz zweier mit Unterwassertragflügeln versehener Holme ermöglicht dabei, den Bootskörper auch schon bei geringen Fahrgeschwindigkeiten und möglichst weit aus dem Wasser zu heben, sodass auch bei höheren Wellenbergen, wie Sie beispielsweise auf offener See zu erwarten sind, Wellenschläge am Bootskörper verhindert werden können. Zu diesem Zweck können auch die die Unterwassertragflügel aufnehmenden Holme entsprechend lang ausgebildet sein.

Ein erfindungsgemäßes Segelboot kann sowohl mit einer als auch mit beiden beschriebenen Maßnahmen zur Erzeugung eines Gegenmomentes um die Längsachse des Bootskörpers versehen sein, also entweder mit einem aerodynamischen oder mit einem hydrodynamischen Querruder, oder sowohl einem aerodynamischen als auch mit einem hydrodynamischen Querruder.

Ist das erfindungsgemäße Segelboot beispielsweise zufolge eins hohen Wind- und Segeldruckes in Richtung Lee gekrängt, kann mithilfe der leeseitigen Ruderblätter des aerodynamischen und / oder hydrodynamischen Querruders ein aerodynamischer und / oder hydrodynamischer Auftrieb, mithilfe der luvseitigen Ruderblätter des aerodynamischen und / oder hydrodynamischen Querruders ein aerodynamischer und / oder hydrodynamischer Abtrieb erzeugt werden, um ein der durch den Winddruck entstehenden leeseitigen Krängung entgegenwirkendes Drehmoment um die Längsachse des Bootskörpers zu erzeugen. Gleichzeitig wird dadurch auch der Segeldruck erhöht, was sich vorteilhaft auf die Fahrt des Segelbootes auswirkt.
Durch die Verringerung der leeseitigen Krängung des Segelbootes erhöht sich allerdings die projizierte Segelfläche, sodass sich der Segeldruck bis zum Erreichen eines Punktes ohne Krängung stetig erhöht.

In Abhängigkeit von Winddruck, Fahrgeschwindigkeit und Stellung der Querruder kann in diesem Punkt das durch das Querruder erzeugte Drehmoment um die Längsachse des Bootskörpers einen Wert erreichen, der das durch den Winddruck entstehende Drehmoment um die Längsachse des Bootskörpers übersteigt, sodass sich das erfindungsgemäße Segelboot nach Luv neigt, also eine luvseitige Krängung erreicht.
Im Falle einer luvseitigen Krängung des erfindungsgemäßen Segelbootes ergibt sich aus dem Winddruck im Segel auch eine einen Auftrieb erzeugende Kraftkomponente, sodass das Heben des Bootskörpers über den Wasserspiegel begünstigt wird. Dies wirkt sich insbesondere bei einer größeren Dimensionierung des erfindungsgemäßen Segelbootes günstig aus, weil damit die ansonsten für den Auftrieb verantwortlichen Unterwassertragflügel entlastet werden können.
Um einen zusätzlichen aerodynamischen Auf- oder Abtrieb zu erlangen können die beiden Ruderblätter des aerodynamischen und / oder hydrodynamischen Querruders auch entsprechend gleichsinnig getrimmt werden.
Darüber hinaus wird bei einer luvseitigen Krängung des erfindungsgemäßen Segelbootes durch die Steuerbewegung der Unterwassertragflügel und des dadurch resultierenden Auftriebes die Abdrift eines erfindungsgemäßen Segelbootes reduziert. Zufolge der Maßnahmen kann sich unter günstigen Bedingungen auch eine Drift in Richtung Luv ergeben.
Verlässt der Bootskörper das Wasser, ist auch der Bootskörper bezogen auf den Drehpunkt luvseitig, sodass auch die Gewichtskraft des Bootskörpers eine Erhöhung des Segeldruckes bewirkt.
Da mit einer zunehmenden luvseitigen Krängung des erfindungsgemäßen Segelbootes allerdings auch die projizierte Segelfläche wieder abnimmt, reduziert sich das durch den Winddruck entstehende Drehmoment um die Längsachse des Bootskörpers, sodass bei gleichbleibendem durch das aerodynamische und / oder hydrodynamische Querruder erzeugten Drehmoment die Gefahr besteht, dass das Segelboot instabil wird. Ab dem Erreichen einer vorgegebenen luvseitigen Krängung muss die Stellung der Querruder daher so gewählt werden, dass das durch das aerodynamische und / oder hydrodynamische Querruder erzeugte Drehmoment im Gleichgewicht mit dem durch den Winddruck entstehenden Drehmoment ist.

Aufgrund dieser Maßnahmen zur Regulierung der Krängung eines erfindungsgemäßen Segelbootes kann der Bootskörper in einer aerodynamischen günstigen Weise besonders schmal ausgeführt sein. Ein solcher Bootskörper kann beispielsweise ein Cockpit für eine in Längsrichtung hintereinander sitzende Mannschafft, beispielsweise einen Steuermann und einen Vorschoter aufweisen.

Auf den Strömungsprofilen können vom Bootskörper beabstandete, vorzugsweise am Ende der Strömungsprofile angeordnete Hohlkörper vorgesehen sein, die das Segelboot bei zu starker Krängung durch ihre Auftriebskraft stabilisieren.
Vorteilhafte Bedingungen ergeben sich in diesem Zusammenhang dann, wenn zwischen den beiden Hohlkörpern der Strömungsprofile eine über ein Ventil steuerbare Strömungsverbindung besteht. Dies ermöglicht, jeweils einen Hohlkörper zumindest teilweise mit einer Flüssigkeit zu füllen und diese je nach relativer Position der Hohlkörper zueinander über die Strömungsverbindung und das Steuerventil zum anderen Hohlkörper zu leiten.

Bei einer leeseitigen Krängung des erfindungsgemäßen Segelbootes liegt zufolge der zum Bootskörper symmetrischen Anordnung der Strömungsprofile und somit auch der Hohlkörper der leeseitige Hohlkörper tiefer als der luvseitige Hohlkörper. Ist in dieser Position der luvseitige Hohlkörper mit Flüssigkeit gefüllt und das in der Strömungsverbindung zwischen den Hohlkörpern angeordnete Steuerventil geschlossen, ergibt sich aus der Gewichtskraft des luvseitigen Hohlkörpers ein Drehmoment um die Längsachse des Bootskörpers, das dem durch den Winddruck verursachten Drehmoment um diese Achse entgegenwirkt und somit das Segelboot auch bei höherem Winddruck stabilisiert. Auch durch diese Maßnahme erhöht sich der Segeldruck, was sich ebenfalls vorteilhaft auf die Fahrt des Segelbootes auswirkt. Zusätzlich bewirkt bei noch stärkerer Krängung der leeseitige, leere Hohlkörper nach seinem Eintauchen ins Wasser eine Auftriebskraft, die ebenfalls ein der Krängung entgegenwirkendes Drehmoment um die Längsachse des Bootskörpers bedingt. Vor einem Wendemanöver kann das Steuerventil proportional zur Wendegeschwindigkeit geöffnet werden, sodass die Flüssigkeit über die Strömungsverbindung aus dem luvseitigen Hohlkörper in den leeseitigen Hohlkörper fließt, solange der luvseitigen Hohlkörper höher als der leeseitigen Hohlkörper liegt. Nach dem Wendemanöver ergeben sich folglich wieder die oben beschriebenen Verhältnisse.

Bei einer luvseitigen Krängung des erfindungsgemäßen Segelbootes liegt der luvseitige Hohlkörper tiefer als der leeseitige Hohlkörper. Ist in dieser Position der luvseitige Hohlkörper mit Flüssigkeit gefüllt, ergibt sich aus der Gewichtskraft des luvseitigen Hohlkörpers ein Drehmoment um die Längsachse des Bootskörpers, das dem durch den Winddruck verursachten Drehmoment um diese Achse entgegenwirkt und das Segelboot stabilisiert beziehungsweise den Segeldruck erhöht. Das Steuerventil kann hierbei geöffnet bleiben, weil die Flüssigkeit zufolge Ihrer Gewichtskraft im tieferliegenden luvseitigen Hohlkörper verbleibt. Wird nach einer Wende des eine luvseitige Krängung aufweisenden erfindungsgemäßen Segelbootes wieder eine luvseitige Krängung angesteuert, kann das Steuerventil während des gesamten Wendemanövers geöffnet bleiben, weil nach der Wende wieder der luvseitige Hohlkörper tiefer als der leeseitige Hohlkörper liegt und sich somit nach dem Wendemanöver wieder die oben beschriebenen Verhältnisse ergeben.
Die Flussgeschwindigkeit der Flüssigkeit während der Wende vom höherliegenden zum tieferliegenden Hohlkörper kann über das Steuerventil in Abhängigkeit der Wendegeschwindigkeit reguliert werden.
Die Strömungsverbindung zwischen den Hohlkörpern kann unterschiedlich ausgestaltet sein, beispielsweise können die Hohlkörper über mehrere, durch die beiden Strömungsprofile führende und durch je ein Ventil regulierbare Rohrleitungen verbunden sein.
Zur Steuerung der Durchflussmenge können diese Ventile entweder zugleich oder nacheinander proportional zur erforderlichen Durchflussmenge geöffnet beziehungsweise geschlossen werden.

Zum Füllen eines Hohlkörpers kann das Ventil als Mehrwegventil ausgebildet sein, von dem eine Strömungsverbindung zu einem unter dem Rumpf des Bootskörpers angeordneten, unter der Wasserlinie liegenden Füllstutzen führt. Durch diese Maßnahme kann zwischen dem Füllstutzen und jeweils einem der Hohlkörper eine Strömungsverbindung hergestellt werden, um den jeweiligen Hohlkörper bei ausreichend hoher Fahrgeschwindigkeit zu füllen.
Zu diesem Zweck kann die Strömungsverbindung zwischen dem Füllstutzen und dem Ventil als ein im Bereich des Ventiles am Bootskörper angelenktes Rohr ausgebildet sein, das auf der der Anlenkung gegenüberliegenden Seite über einen Seilzug am Bootskörper befestigt ist. Abhängig von der Höhe des Bootskörpers über dem Wasser und der Rohrlänge kann der Füllstutzen somit durch eine Drehung des Rohres um den Anlenkpunkt durch Betätigung des Seilzuges unter die Wasseroberfläche gebracht werden, um die Hohlkörper zu befüllen.
Die Hohlkörper können zum Befüllen über eine entsprechende Entlüftung, beispielsweise in Form einer einfachen Entlüftungsöffnung verfügen.

Es ergeben sich besonders vorteilhafte Manövriereigenschaften, wenn eine gemeinsame Querrudersteuerung für das auf den Strömungsprofilen angeordnete aerodynamische Querruder und die hydrodynamischen Querruder vorgesehen ist. Diese gemeinsame Querrudersteuerung dient der Steuerung der Krängung des erfindungsgemäßen Segelbootes.
Die gemeinsame Querrudersteuerung kann dabei je nach Fahrgeschwindigkeit unterschiedlich starke Ruderbewegungen bei dem aerodynamischen Querruder und bei dem hydrodynamisches Querruder vorsehen. Aufgrund des vergleichsweise hohen Strömungswiderstandes unter Wasser wird bei geringen Geschwindigkeiten vorzugsweise das hydrodynamische Querruder, bei höheren Fahrgeschwindigkeiten vorzugsweise das aerodynamische Querruder zur Steuerung der Krängung des erfindungsgemäßen Segelbootes eingesetzt.
Beispielsweise kann die Ruderbewegung bei dem aerodynamischen Querruder gleich bleiben, während die Ruderbewegung bei den hydrodynamischen Querrudern mit steigender Fahrgeschwindigkeit abnimmt. Auch kann die Ruderbewegung des aerodynamischen Querruders mit steigender Fahrgeschwindigkeit zunehmen. Schließlich können sowohl das aerodynamische Querruder als auch die hydrodynamischen Querruder für einen vorzugebenden Auftrieb getrimmt werden, um zu steuern, wie hoch der Bootskörper über die Wasseroberfläche gelangt beziehungsweise um eine unten näher ausgeführte Höhenruderwirkung zu erzielen.

Als hydrodynamisches Seitenruder kann für ein erfindungsgemäßes Segelboot ein im Heckbereich des Bootskörpers angeordneter, nach unten abstehender Holm um seine Längsachse drehbar am Bootskörper gelagert sein. Der Holm kann dabei selbst flach und damit als Ruderblatt ausgebildet sein oder mit einem an diesem Holm angebrachten Unterwassertragflügel ein Ruderblatt für ein Seitenruder bilden.
Vorteilhafte Konstruktionsverhältnisse ergeben sich in diesem Zusammenhang, wenn der Holm nicht nur drehbar, sondern auch aufholbar am Bootskörper angelenkt ist, sodass sich die unter Wasser ergebende Holmlänge durch aufholen des Holmes einstellen lässt. Selbstverständlich können auch andere Holme aufholbar ausgeführt werden.
Darüber hinaus kann auch das auf den V-förmigen Strömungsprofilen angeordnete Leitwerk ein aerodynamisches Seitenruder bilden.

Durch den Segeldruck wird nicht nur ein Drehmoment um die Längsachse des Bootskörpers, sondern zufolge der Kraftkomponente in Fahrtrichtung auch ein Drehmoment um die Querachse des Bootskörpers erzeugt. Um diesem Drehmoment entgegen zu wirken, kann das erfindungsgemäße Segelboot hecklastig getrimmt werden, was beispielsweise durch eine Anordnung des Cockpits im Heckbereich erreicht werden kann.
Zusätzlich können die, entweder als hydrodynamisches Höhenruder oder als hydrodynamisches Querruder ausgebildeten Tragflügel zur Erzeugung eines dem durch den Segeldruck bedingten Drehmoment entgegenwirkenden Auftriebes getrimmt werden.
Neben solchen hydrodynamischen Höhenrudern kann auch ein in Fahrtrichtung vor der Querachse liegendes aerodynamisches Höhenruder vorgesehen sein, dass beispielsweise in Form eines zusätzlichen Leitwerkes ausgebildet sein kann, dessen Ruderblätter seitlich am Bootskörper angeordnet sind.
Vorteilhafte Kraftverhältnisse und Konstruktionsbedingungen ergeben sich, wenn ein solches aerodynamisches Höhenruder durch zwei seitlich im Bereich des Buges am Bootskörper angelenkte Ruderblätter gebildet wird.
Darüber hinaus kann auch das auf den V-förmigen Strömungsprofilen angeordnete Leitwerk ein aerodynamisches Höhenruder bilden.

In diesem Zusammenhang können die Manövriereigenschaften eines erfindungsgemäßen Segelbootes verbessert werden, wenn eine gemeinsame Höhenrudersteuerung für die hydrodynamischen und aerodynamischen Höhenruder vorgesehen ist. Diese gemeinsame Höhenrudersteuerung dient der Steuerung der Neigung des erfindungsgemäßen Segelbootes um seine Querachse.
Die gemeinsame Höhenrudersteuerung kann dabei je nach Fahrgeschwindigkeit unterschiedlich starke Ruderbewegungen bei den aerodynamischen Höhenrudern und bei den hydrodynamischen Höhenrudern vorsehen. Aufgrund des vergleichsweise hohen Strömungswiderstandes unter Wasser wird bei geringen Geschwindigkeiten vorzugsweise das hydrodynamische Höhenruder, bei höheren Fahrgeschwindigkeiten vorzugsweise das aerodynamische Höhenruder zur Steuerung der Neigung des erfindungsgemäßen Segelbootes um seine Querachse eingesetzt.

Die gemeinsamen Querruder- und Höhenrudersteuerungen, eine Steuerung für das Seitenruder und gegebenenfalls eine Steuerung für das in der Strömungsverbindung zwischen den beiden Hohlkörpern vorgesehene Ventil können in einer gemeinsamen Steuerkonsole zusammengefasst werden. Beispielsweise können für das Seitenruder zwei Fußpedale und für die Steuerung der Querruder und Höhenruder ein Steuerknüppel vorgesehen sein, mit dem die Ruderblätter der Querruder in einer Seitenbewegung gegensinnig im Sinne eines Querruders und in einer Bewegung quer dazu gleichsinnig im Sinne eines Höhenruders gemeinsam mit einem allenfalls vorgesehenen getrennten aerodynamischen Höhenruder ansteuerbar sind. Darüber hinaus kann ein Regler für die gemeinsame Steuerung für die Querruder vorgesehen sein, mit dem der Ruderausschlag der hydrodynamischen Querruder reduziert werden kann.
Weiters kann ein Regler vorgesehen werden, mit dem die Querruder unabhängig vom oben beschriebenen Steuerknüppel getrimmt werden können, um einen bestimmten Auftrieb des erfindungsgemäßen Segelbootes einstellen zu können.
Ein solcher Regler kann unabhängig für das aerodynamische und das hydrodynamische Querruder vorgesehen sein.

Um die aerodynamischen Eigenschaften eines erfindungsgemäßen Segelbootes noch weiter zu verbessern, kann auf dem dem Bootskörper gegenüberliegenden Ende des Hauptmasten ein zusätzliches Leitwerk angeordnet werden, das so ausgebildet ist, dass sich das Großsegel mit dem obersten, ausgestellten Segelteil an das Leitwerk anlegt, sodass das Großsegel im Topbereich nach oben mit dem Leitwerk bündig abschließt. Diese Maßnahme reduziert die im Topbereich des Großsegels auftretenden Verwirbelungen und damit den damit verbundenen aerodynamischen Widerstand.

Vorteilhafte Segelbedingungen ergeben sich bei einem erfindungsgemäßen Segelboot dann, wenn die aerodynamischen und / oder hydrodynamischen Querruder so angesteuert werden, dass sich unter einer luvseitigen Krängung des Segelbootes ein Gleichgewicht zwischen dem durch das aerodynamische und / oder hydrodynamische Querruder erzeugte Drehmoment und dem durch den Winddruck entstehenden Drehmoment einstellt. Wie oben ausgeführt ergibt sich durch diese Maßnahme nicht nur aus dem Winddruck im Segel eine einen Auftrieb erzeugende Kraftkomponente, die die mechanische Belastung der Unterwassertragflügel reduziert sondern es wird aus den oben angeführten Gründen auch der Segeldruck maximiert, wodurch eine sehr hohe Fahrgeschwindigkeit des erfindungsgemäßen Segelbootes erreicht wird.

### Kurze Beschreibung der Zeichnung

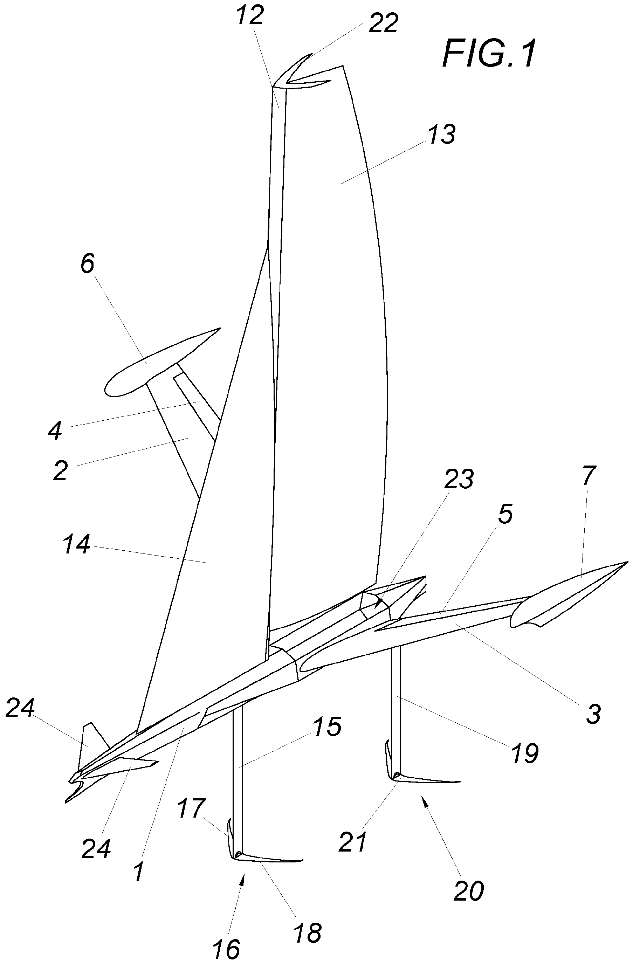

In der Zeichnung ist der Erfindungsgegenstand beispielsweise dargestellt. Es zeigen
- Fig. 1: eine perspektivische Ansicht auf ein erfindungsgemäßes Segelboot in einer vereinfachten, schematischen Darstellung,
- Fig. 2: eine Seitenansicht des Segelbootes der Fig. 1 und
- Fig. 3: eine Aufsicht des Segelbootes der Fig. 1 und 2.

### Weg zur Ausführung der Erfindung

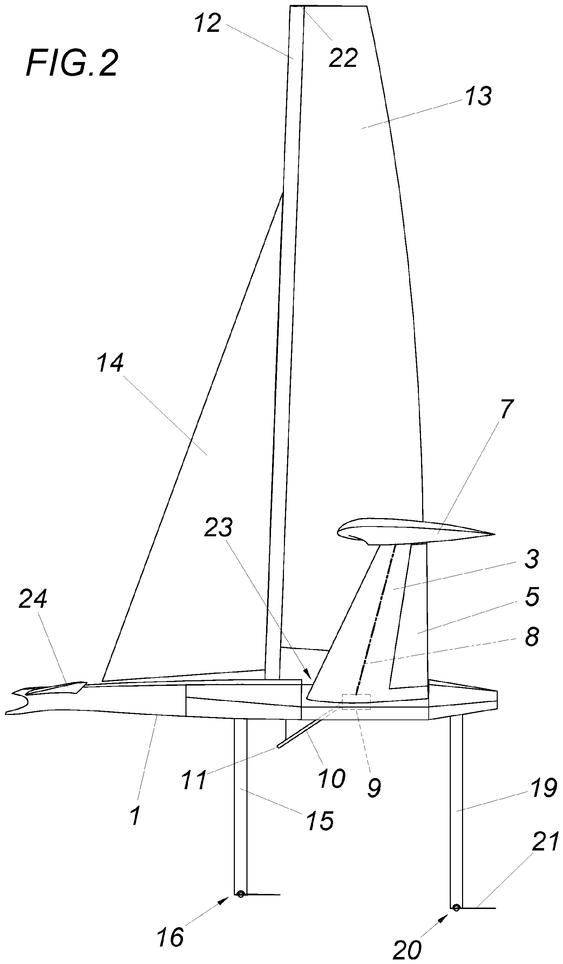

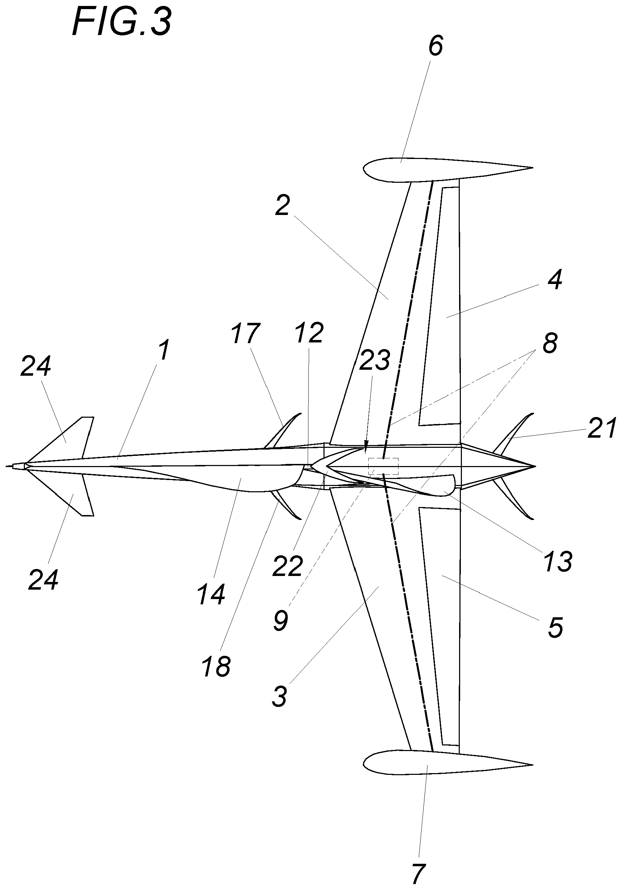

Ein erfindungsgemäßes Segelboot umfasst einen Bootskörper 1 und zwei seitlich vom Bootskörper abstehende Strömungsprofile 2 und 3. Die Strömungsprofile 2 und 3 sind zueinander V-förmig und symmetrisch zum Bootskörper 1 angeordnet. Die Strömungsprofile 2 und 3 weisen je ein als aerodynamisches Querruder 4 und 5 ausgebildetes aerodynamisches Leitwerk auf. An den dem Bootskörper 1 abgewandten Enden der Strömungsprofile 2 und 3 ist je ein Hohlkörper 6 und 7 angeordnet. Wie insbesondere den Figuren 2 und 3 entnommen werden kann, sind die Hohlkörper 6 und 7 über eine strichpunktiert angedeutete Strömungsverbindung 8 und ein in diese Strömungsverbindung 8 eingeschaltetes Mehrwegventil 9 verbunden. Vom Mehrwegventil 9 führt ebenfalls eine Strömungsverbindung 10 zu einem unter der Wasserlinie des Bootskörpers 1 liegenden Füllstutzen 11. Das Mehrwegventil 9 dient dabei der Herstellung einer Strömungsverbindung zwischen den Hohlkörpern 6 und 7 über die Strömungsverbindung 8 auf der einen Seite und zwischen dem Füllstutzen 11 und einem dieser beiden Hohlkörpern 6 oder 7 über die Strömungsverbindungen 10 und 8.

Vom Bootskörper 1 ragt mittschiffs ein Mast 12 mit einem Großsegel 13 und einem Focksegel 14 auf. Im Bereich des Masten 12 ist auf der Unterseite des Bootskörpers 1 ein nach unten ragender Holm 15 angeordnet, der an seinem dem Bootskörper 1 gegenüberliegenden Ende einen Unterwassertragflügel 16 aufweist, der aus zwei Ruderblättern 17 und 18 besteht, die am Holm 15 drehbar gelagert sind und somit ein hydrodynamisches Querlager ausbilden.

Im Heckbereich des Bootskörpers 1 ist ein zweiter nach unten ragender Holm 19 angeordnet, der auf seinem dem Bootskörper 1 abgewandten Ende ebenfalls einen Unterwassertragflügel 20 aufweist, der jedoch nicht wie der Unterwassertragflügel 16 als hydrodynamisches Querruder, sondern lediglich als hydrodynamisches Höhenruder ausgebildet ist. Der Unterwassertragflügel 20 weist daher nur ein einzelnes Ruderblatt 21 auf. Der Holm 19 ist unter Bildung eines Seitenruders am Bootskörper 1 um seine Längsachse drehbar angelengt. Sowohl der Holm 15 als auch der Holm 19 sind dabei in den Bootskörper 1 aufholbar ausgebildet.

Um eine Störung des hydrodynamischen Höhenruders 20 aufgrund der durch das hydrodynamische Querruder 16 erzeugten Wasserverwirbelungen zu vermeiden, ist der Holm 19 länger als der Holm 15 ausgebildet, sodass die beiden hydrodynamischen Querruder 16 und 20 auf unterschiedlichen Höhenebenen aber beide auf der Ebene der Längsachse des Bootskörpers 1 liegen.

Zur Verbesserung der aerodynamischen Eigenschaften des erfindungsgemäßen Segelbootes ist auf dem dem Bootskörper 1 gegenüberliegenden Ende des Masten 12 ein Leitwerk 22 vorgesehen, das so ausgebildet ist, dass sich das Großsegel 13 mit dem obersten, ausgestellten Segelteil an das Leitwerk 22 anlegt, sodass das Großsegel 13 im Topbereich nach oben mit dem Leitwerk 22 bündig abschließt.

Zur Aufnahme der Mannschaft ist bei einem erfindungsgemäßen Segelboot ein im Bootskörper 1 hinter dem Masten 12 angeordnetes Cockpit 23 vorgesehen, das mit zwei in der Zeichnung nicht näher dargestellten Sitzen für einen Steuermann und einen Vorschoter versehen ist.

Als zusätzliches aerodynamisches Höhenruder 24 können zwei Ruderblätter seitlich im Bereich des Buges am Bootskörper 1 angelenkt sein.

## Patentansprüche

1. Segelboot mit einem Bootskörper (1), mit einem Mast (12) für ein Segel (13, 14), zwei seitlich vom Bootskörper (1) abstehenden Strömungsprofilen (2, 3) und wenigstens einem Unterwassertragflügel (16), **dadurch gekennzeichnet, dass** die Strömungsprofile (2, 3) V-förmig vom Bootskörper nach oben ragen und je ein aerodynamisches Querruder (4, 5) bildendes aerodynamisches Leitwerk aufweisen und dass der wenigstens eine Unterwassertragflügel (16) mit einem ein hydrodynamisches Querruder bildendes hydrodynamischen Leitwerk versehen ist.

2. Segelboot nach Anspruch 1, **dadurch gekennzeichnet, dass** die Strömungsprofile (2, 3) je einen vom Bootskörper beabstandeten Hohlkörper (6, 7) aufweisen.

3. Segelboot nach Anspruch 1 oder 2, **dadurch gekennzeichnet, dass** zwischen den beiden Hohlkörpern (6, 7) der Strömungsprofile (2, 3) eine über ein Ventil steuerbare Strömungsverbindung (8) besteht.

4. Segelboot nach Anspruch 3, **dadurch gekennzeichnet, dass** das Ventil als Mehrwegventil (9) ausgebildet ist, von dem eine Strömungsverbindung (10) zu einem unter dem Rumpf des Bootskörpers (1) angeordneten, unter der Wasserlinie liegenden Füllstutzen (11) führt.

5. Segelboot nach einem der Ansprüche 1 bis 4, **dadurch gekennzeichnet, dass** eine gemeinsame Steuerung für das auf den Strömungsprofilen (2, 3) angeordnete aerodynamische Querruder (4, 5) und das durch einen Unterwassertragflügel (16, 20) gebildete hydrodynamische Unterwasserquerruder vorgesehen ist.

6. Segelboot nach einem der Ansprüche 1 bis 5, **dadurch gekennzeichnet, dass** ein durch zwei seitlich im Bereich des Buges am Bootskörper (1) angelenkte Ruderblätter gebildetes aerodynamisches Höhenruder (24) vorgesehen ist.

7. Segelboot nach einem der Ansprüche 1 bis 6, **dadurch gekennzeichnet, dass** auf dem dem Bootskörper (1) gegenüberliegenden Ende des Hauptmasten (12) ein zusätzliches Leitwerk (22) angeordnet ist, das so ausgebildet ist, dass sich das Großsegel (13) mit dem obersten, ausgestellten Segelteil an das Leitwerk (22) anlegt.

8. Verfahren zum Segeln eines Segelbootes nach einem der Ansprüche 1 bis 7, **dadurch gekennzeichnet, dass** sich unter einer luvseitigen Krängung des Segelbootes ein Gleichgewicht zwischen dem durch das aerodynamische und / oder hydrodynamische Querruder erzeugte Drehmoment und dem durch den Winddruck entstehenden Drehmoment einstellt.

## Claims

1. Sailboat having comprising a boat hull (1), comprising a mast (12) for a sail (13, 14), two flow profiles (2, 3) protruding laterally from the boat hull (1) and at least one underwater hydrofoil (16), **characterised in that** the flow profiles (2, 3) protrude upwards in a V-shape from the boat hull and each have an aerodynamic stabiliser forming an aerodynamic aileron (4, 5) and **in that** the at least one underwater hydrofoil (16) is provided with a hydrodynamic stabiliser forming a hydrodynamic aileron.

2. Sailboat as claimed in claim 1, **characterised in that** the flow profiles (2, 3) each have a hollow body (6, 7) spaced apart from the boat hull.

3. Sailboat as claimed in claim 1 or 2, **characterised in that** a flow connection (8) which can be controlled by a valve is provided between the two hollow bodies (6, 7) of the flow profiles (2, 3).

4. Sailboat as claimed in claim 3, **characterised in that** the valve is configured as a multiway valve (9), from which a flow connection (10) leads to a filling nozzle (11) which is arranged under the body of the boat hull (1) and is located under the water line.

5. Sail boat as claimed in any one of claims 1 to 4, **characterised in that** that a common controller is provided for the aerodynamic aileron (4, 5) arranged on the flow profiles (2, 3) and the hydrodynamic underwater aileron formed by an underwater hydrofoil (16, 20).

6. Sailboat as claimed in any one of claims 1 to 5, **characterised in that** an aerodynamic elevator (24) is provided which is formed by two rudder blades articulated laterally to the boat hull (1) in the region of the bow.

7. Sail boat as claimed in any one of claims 1 to 6, **characterised in that** an additional stabiliser (22) is arranged on the end of the main mast (12) opposite the boat hull (1) and is configured such that the main sail (13) rests with the uppermost, extended sail part against the stabiliser (22).

8. Method of sailing a sail boat as claimed in any one of claims 1 to 7, **characterised in that**, under a windward heeling of the sailboat, an equilibrium is established between the torque generated by the aerodynamic aileron and/or the hydrodynamic aileron and the torque produced by the wind pressure.

## Revendications

1. Voilier avec une coque de bateau (1), un mât (12) pour une voile (13, 14), deux profilés aérodynamiques (2,3) écartés latéralement de la coque (1) et au moins une aile portante sous-marine (16), **caractérisé en ce que** les profilés aérodynamiques (2, 3) dépassent de la coque en forme de V vers le haut et présentent chacun un empennage aérodynamique formant un aileron aérodynamique (4, 5) et que l'au moins une aile portante sous-marine (16) est dotée d'un empennage hydrodynamique formant un aileron hydrodynamique.

2. Voilier selon la revendication 1, **caractérisé en ce que** les profilés aérodynamiques (2, 3) présentent chacun un corps creux (6, 7) écarté de la coque.

3. Voilier selon la revendication 1 ou 2, **caractérisé en ce qu'**une liaison fluidique (8) contrôlable par une vanne se trouve entre les deux corps creux (6, 7) des profilés aérodynamiques (2, 3).

4. Voilier selon la revendication 3, **caractérisé en ce que** la vanne est une vanne multivoie (9) à partir de laquelle une liaison fluidique (10) conduit à un embout de remplissage (11) situé sous le fuselage de la coque (1), au-dessous de la ligne de flottaison.

5. Voilier selon une des revendications 1 à 4, **caractérisé en ce qu'**il est prévu une commande commune pour l'aileron aérodynamique (4,5) disposé sur les profilés aérodynamiques (2, 3) et l'aileron hydrodynamique sous-marin formé par une aile portante sous-marine (16, 20).

6. Voilier selon une des revendications 1 à 5, **caractérisé en ce qu'**il est prévu un aileron de profondeur aérodynamique (24) formé par deux safrans articulés latéralement sur la coque (1) dans la région de la proue.

7. Voilier selon une des revendications 1 à 6, **caractérisé en ce qu'**à l'extrémité du mât principal (12) opposée à la coque (1) est disposé un empennage supplémentaire (22) qui est configuré de sorte que la partie supérieure de la grand-voile (13) s'applique contre lui.

8. Procédé pour naviguer avec un voilier selon une des revendications 1 à 7, **caractérisé en ce qu'**en cas d'inclinaison par vent arrière du voilier, il se produit un équilibre entre le couple de rotation produit par l'aileron aérodynamique et/ou hydrodynamique et le couple de rotation produit par la pression du vent.
